# FASCICULE DE BREVET EUROPEEN

(11) **EP 1 339 274 B1**
(45) Date de publication et mention de la délivrance du brevet: **29.06.2005**
(21) Numéro de dépôt: 01997218.1
(22) Date de dépôt: 22.10.2001
(51) Int. Cl.: A01G 25/02, B29C 47/02

(54) **LIGNE DE FABRICATION D'UN TUYAU D'IRRIGATION GOUTTE-A-GOUTTE ET PROCEDE POUR LA MISE EN OEUVRE DE CETTE LIGNE DE FABRICATION**
HERSTELLUNGSLINIE FÜR EINEN TROPFBEWÄSSERUNGSSCHLAUCH UND VERFAHREN ZUR BENUTZUNG DIESER LINIE
PRODUCTION LINE OF A DRIP IRRIGATION PIPE AND METHOD FOR USING SAID PRODUCTION LINE

(30) Priorité: 27.11.2000 EP 00204223
(43) Date de publication de la demande: 03.09.2003
(73) Titulaire: Thomas Electronique S.A., 2108 Couvet (CH)
(72) Inventeur: BERNAUER, Thomas, CH-2000 Neuchâtel (CH); KERTSCHER, Eberhard, CH-1462 Yvonand (CH)
(74) Mandataire: Ravenel, Thierry Gérard Louis
(86) Numéro de dépôt international: PCT/EP2001/012414
(87) Numéro de publication internationale: WO 2002/041690

(56) Documents cités:
- EP-A- 0 549 515
- EP-A- 0 970 602
- US-A- 5 324 371
- US-A- 5 324 379

## Description

La présente invention concerne le domaine de l'irrigation goutte-à-goutte et plus particulièrement un procédé de fabrication d'un tuyau d'irrigation et une ligne de fabrication pour la mise en oeuvre de ce procédé.

Il est de technique courante d'utiliser, pour certaines irrigations, des tuyaux dits "goutte-à-goutte". Il s'agit de tuyaux dont la paroi est percée, à des intervalles de distance fixés à l'avance, par des trous de petit diamètre par lesquels l'eau s'écoule dans le sol. Pour contrôler avec précision le débit des trous, on prévoit, au niveau de chaque trou, un limiteur de débit couramment appelé "goutteur", qui peut se composer d'une pièce en matière plastique cylindrique creuse qui est collée sur la paroi interne du tuyau. Cette pièce présente, du côté tourné vers la paroi intérieure du tuyau, une partie en creux qui forme une chambre collectrice. Cette chambre collectrice est reliée à l'espace intérieur du tuyau par un conduit à pertes de charges calculées, par exemple un conduit formant labyrinthe. Ce labyrinthe est constitué par une rainure préparée à l'avance sur la face du goutteur cylindrique qui est destinée à être tournée vers la face interne du tuyau.

Les goutteurs cylindriques sont fabriqués individuellement, par exemple par injection de matière thermoplastique. Dans la pratique, dans la plupart des cas, le tuyau d'irrigation est fabriqué de la manière suivante : un polymère, du polyéthylène en général, est envoyé dans un dispositif d'extrusion et celui-ci produit, en continu, grâce à une tête de formage, une ébauche de tube dans les dimensions voulues. L'ébauche de tube est ensuite amenée dans des moyens de calibrage qui fixent les dimensions et la forme du tube avant refroidissement. Dès que le tube, encore chaud, sort de la tête d'extrusion, un goutteur cylindrique, amené dans la tête d'extrusion par un dispositif approprié, est pressé contre la paroi intérieure du tube et se colle contre celui-ci en fondant localement. Une fois l'ensemble tuyau-goutteur refroidi dans un bac à eau, un trou est percé dans la paroi du tuyau, au droit de la chambre collectrice.

Un premier inconvénient d'un tel processus de fabrication réside dans la manière dont les goutteurs sont amenés dans la tête d'extrusion. En effet, pour amener les goutteurs cylindriques, il est habituellement prévu un dispositif d'alimentation qui se présente sous la forme d'un magasin, disposé perpendiculairement à la direction d'extrusion du tuyau, et dans lequel sont stockés les goutteurs. Un ressort pousse les goutteurs vers le haut et un dispositif de déplacement muni d'un piston est prévu pour faire avancer les goutteurs jusque dans la tête d'extrusion et les moyens de calibrage.

Un tel procédé pour fixer des goutteurs cylindriques est, par exemple, décrit dans le brevet américain No. 3,981,452 au nom de Eckstein. Ce procédé se distingue notamment par une vitesse d'introduction des goutteurs dans le tuyau relativement lente due à la cadence limitée à laquelle les goutteurs sont poussés vers le haut dans le magasin d'alimentation, puis déplacés selon la direction d'extrusion du tuyau par le piston. Ainsi, pour que les goutteurs puissent se répéter avec le pas voulu dans le sens longitudinal du tuyau, il faut souvent ralentir la vitesse d'extrusion dudit tuyau. L'ensemble formé par le magasin et le piston est également peu fiable mécaniquement et susceptible de se bloquer, de sorte qu'il est difficile à mettre en oeuvre de façon continue. Enfin, pour pouvoir ajuster le pas avec lequel les goutteurs cylindriques vont se répéter longitudinalement dans le tuyau, il faut adapter en conséquence la fréquence à laquelle le piston pousse les goutteurs dans le tuyau. Cette opération s'avère particulièrement délicate dans la mesure où le mécanisme d'entraînement du piston, qui doit être capable de transformer le mouvement de rotation du moteur d'entraînement dudit piston en un mouvement rectiligne alternatif d'aller et de retour, est particulièrement complexe et difficile à régler, ce qui provoque de fréquentes défaillances qui entraînent des quantités de déchets non négligeables. Typiquement, avec un dispositif tel que celui décrit dans le brevet Eckstein, on ne peut, pour un pas donné, introduire plus de cent goutteurs et percer plus de cent à cent vingt mètres de tube à la minute, ce qui représente une cadence de fabrication relativement faible qui a, bien entendu, un impact négatif sur le prix de revient du tuyaux d'irrigation fini.

Un deuxième inconvénient rencontré lors de la fabrication de tuyaux d'irrigation réside dans le fait que les goutteurs cylindriques, pour des raisons liées à la difficulté de contrôler de manière précise les conditions dans lesquelles ils sont fabriqués, présentent fréquemment des imperfections de forme notables comme des bavures résultant du moulage, des déformations et autres irrégularités qui les éloignent parfois fortement de la forme généralement cylindrique que l'on recherche. Ainsi, certains goutteurs vont présenter en section un profil qui sera plus proche de celui d'une ellipse que d'un cercle au périmètre régulier.

Ces défauts de forme des goutteurs cylindriques ont une influence sur la qualité de la fixation par soudage desdits goutteurs contre la paroi intérieure du tuyau, voire peuvent provoquer le déchirement du tuyau, ce qui entraîne des pertes importantes et donc un renchérissement du prix de revient de ce type de tuyau. En effet, les goutteurs aux formes irrégulières sont introduits en même temps que le tuyau d'irrigation dans des moyens de calibrage dans lesquels ledit tuyau d'irrigation, encore chaud, va être conformé dans sa configuration définitive, tandis qu'il se produit une fixation par soudage à chaud du goutteur à la paroi intérieure du tuyau. Ces moyens de calibrage comprennent classiquement une douille métallique présentant un alésage central dont les dimensions correspondent sensiblement au diamètre extérieur du tuyau à fabriquer. Ainsi, un goutteur qui présente des défauts de forme, par exemple une section ovale, va exercer une pression sur la paroi intérieure du tuyau en formation. La paroi intérieure du tuyau, en appui contre la surface intérieure de l'alésage de la douille, ne va pas pouvoir se déformer suffisamment pour épouser la forme que lui imprime la surface extérieure du goutteur et va alors se déchirer.

On connaît également du document EP 0 970 602 un procédé de fabrication d'un tuyau goutte-à-goutte et une ligne de fabrication pour la mise en oeuvre du procédé dans lequel des goutteurs plats sont introduits les uns après les autres à l'intérieur d'un tuyau pendant que celui-ci est formé dans une extrudeuse afin de les fixer à la paroi intérieure du tuyau. Selon ce document, les goutteurs plats sont fixés en aval de l'extrudeuse par pincement du goutteur et de la paroi du tuyau entre deux surfaces antagonistes dont une est entraînée à la vitesse de progression du tuyau. Ce document ne donne toutefois aucun enseignement relatif au soudage de goutteurs cylindriques à une paroi intérieure d'un tuyau.

La présente invention a donc pour but de fournir une ligne de fabrication de tuyaux d'irrigation goutte-à-goutte dépourvue des inconvénients précités et permettant notamment d'éviter que des goutteurs qui, en section, s'écartent de façon plus ou moins prononcée de la forme cylindrique, ne déchirent la matière du tuyau d'irrigation en formation lorsqu'ils sont fixés par soudage à chaud sur la paroi intérieure dudit tuyau.

La présente invention permet également d'introduire des goutteurs cylindriques dans le tuyau d'irrigation sans l'aide d'un piston, évitant ainsi toute opération intermittente au cours du processus de fabrication de ce tuyau d'irrigation.

Un autre but de la présente invention est de procurer une ligne de fabrication du genre susmentionné qui permet un réglage aisé du pas avec lequel les goutteurs cylindriques se répètent longitudinalement dans le tuyau d'irrigation ainsi qu'une augmentation sensible de la cadence de fabrication dudit tuyau.

A cet effet, et selon un premier mode de réalisation, la présente invention concerne une ligne de fabrication d'un tuyau d'irrigation du type goutte-à-goutte comprenant :
- un poste d'amenée de goutteurs cylindriques;
- une tête d'extrusion du tuyau d'irrigation qui permet de former une ébauche de tuyau, et
- des moyens de calibrage dans lesquels le tuyau d'irrigation est conformé dans sa configuration désirée,
- les goutteurs circulant dans la ligne de fabrication depuis le poste d'amenée situé en amont de ladite ligne de fabrication vers la tête d'extrusion située en aval de cette ligne,
caractérisée en ce qu'elle comprend en outre un tube traversé par les goutteurs cylindriques et disposé selon l'axe d'extrusion dudit tuyau, ce tube s'étendant du côté amont au moins en partie dans la tête d'extrusion, et s'étendant du côté de son extrémité aval au moins en partie dans les moyens de calibrage.

Selon une caractéristique complémentaire de l'invention, le tube traversé par les goutteurs s'étend au moins jusqu'à la sortie des moyens de calibrage.

Grâce à ces caractéristiques, l'invention procure un système qui permet d'éviter que des goutteurs aux formes irrégulières ne déchirent le tuyau lorsqu'ils sont fixés par soudage à chaud sur la paroi intérieure dudit tuyau. En effet, les goutteurs ne sont introduits dans le tuyau d'irrigation pour y être fixés que lorsque ce tuyau est déjà, au moins en partie, sorti des moyens de calibrage destinés à lui conférer sa forme définitive. Comme l'opération de fixation à chaud des goutteurs est exécutée en aval des moyens de calibrage, l'expansion du tuyau d'irrigation n'est plus, à ce stade des opérations, limitée par lesdits moyens de calibrage. Compte tenu de sa mollesse, le tuyau d'irrigation va ainsi pouvoir épouser sans difficulté et sans se déchirer la forme que lui imprime la surface extérieure du goutteur.

Selon encore une autre caractéristique de l'invention, le poste d'amenée comprend des moyens doseurs dans lesquels est formée une file d'attente constituée d'une succession de goutteurs cylindriques contigus par leurs extrémités, lesdits goutteurs progressant dans les moyens doseurs à une vitesse inférieure à la vitesse d'extrusion du tuyau, puis étant ensuite libérés par lesdits moyens doseurs avant de pénétrer dans le tube susdécrit.

Le système selon l'invention permet ainsi une augmentation de la vitesse de fabrication des tuyaux d'irrigation dans la mesure où les goutteurs circulent dans la ligne de fabrication selon l'axe d'extrusion desdits tuyaux et sont amenés en continu par le tube jusque au-delà des moyens de calibrage. Le processus d'amenée des goutteurs conforme à l'invention se déroule donc de manière linéaire, ce qui le distingue très nettement des dispositifs de l'art antérieur dans lesquels des pièces animées de mouvements alternatifs font décrire aux goutteurs des trajectoires composites tout d'abord transversalement, puis axialement à la direction d'extrusion.

Selon une variante de réalisation de l'invention, entre les moyens doseurs et le tube sont prévus des moyens de convoyage qui amènent les goutteurs provenant du poste d'amenée jusqu'à l'entrée du tube en leur imprimant une vitesse sensiblement égale à la vitesse d'avance du tuyau dans la tête d'extrusion au moment où lesdits goutteurs entrent en contact avec ledit tuyau.

Cela permet donc d'amener les goutteurs cylindriques depuis le poste d'amenée à une vitesse inférieure à la vitesse d'avance du tuyau d'irrigation en amont de la tête d'extrusion, puis à imprimer aux goutteurs une vitesse sensiblement égale à la vitesse du tuyau après que lesdits goutteurs aient traversé la tête d'extrusion.

En amenant chaque goutteur cylindrique en contact avec le tuyau d'irrigation à la vitesse d'avance de ce dernier dans la tête d'extrusion, on évite les chocs entre les goutteurs et le tuyau qui pourraient détériorer ledit tuyau qui est encore chaud et déformable à cet instant.

Au sens de la présente invention, on entend par vitesse des goutteurs "sensiblement égale" à la vitesse d'avance du tuyau dans la tête d'extrusion, une vitesse des goutteurs qui n'est pas inférieure de plus de 20% à la vitesse d'extrusion du tuyau, cette vitesse étant d'autant plus proche de ladite vitesse d'extrusion du tuyau que ledit tuyau est mince. L'invention s'applique particulièrement avantageusement à des tuyaux de faible épaisseur, typiquement inférieure ou égale à 0,6 mm. De la sorte, comme la vitesse relative entre le goutteur et le tuyau en formation est sensiblement nulle, on évite tout choc entre ceux-ci qui pourrait détériorer le tuyau. Par contre, pour des tuyaux de plus forte épaisseur, la vitesse d'avance des goutteurs pourra bien entendu s'écarter davantage de la vitesse d'extrusion du tuyau d'irrigation.

Selon un deuxième mode de réalisation, la présente invention concerne une ligne de fabrication d'un tuyau d'irrigation du type goutte-à-goutte comprenant :
- un poste d'amenée de goutteurs cylindriques;
- une tête d'extrusion du tuyau d'irrigation qui permet de former une ébauche de tuyau, et
- des moyens de calibrage dans lequel le tuyau d'irrigation est conformé dans sa configuration désirée,
- les goutteurs circulant dans la ligne de fabrication depuis le poste d'amenée situé en amont de ladite ligne de fabrication vers la tête d'extrusion située en aval de cette ligne,
caractérisée en ce qu'elle comprend en outre un canal de dosage traversé par les goutteurs, ce canal étant disposé du côté amont au moins en partie dans la tête d'extrusion et s'étendant à l'intérieur de ladite tête d'extrusion jusque dans la région de sortie de cette dernière.

Selon une caractéristique complémentaire, la position du canal de dosage est ajustable axialement pour prendre en compte la position du cône d'étirement du tuyau en formation au niveau de la jonction entre la sortie de ladite tête d'extrusion et l'entrée des moyens de calibrage afin de déterminer le point où lesdits goutteurs s'accrochent le mieux audit tuyau.

L'invention fournit ainsi un système de fabrication de tuyaux d'irrigation qui permet une nouvelle augmentation des cadences, tout en améliorant encore la qualité de la mise en place des goutteurs cylindriques, en particulier en ce qui concerne la constance de leur espacement et leur soudage homogène sur le tuyau d'irrigation. A titre d'exemple, avec un tel dispositif, il est possible, pour un pas donné des goutteurs dans le tuyau, d'introduire jusqu'à cinq cents de ces goutteurs dans le tuyau par minute.

Comme déjà mentionné ci-dessus en liaison avec le premier mode de réalisation, le poste d'amenée des goutteurs de la ligne de fabrication conforme au second mode de réalisation de l'invention comprend des moyens doseurs dans lesquels lesdits goutteurs progressent en se touchant par leurs extrémités à une vitesse inférieure à la vitesse d'extrusion du tuyau d'irrigation, avant d'être libérés par ces moyens doseurs et de pénétrer dans le canal de dosage.

De même, selon une variante de réalisation, entre les moyens doseurs et le canal de dosage sont prévus des moyens de convoyage qui injectent les goutteurs cylindriques dans le canal de dosage à une vitesse sensiblement égale à la vitesse d'extrusion du tuyau.

L'invention concerne également un procédé pour la mise en oeuvre des lignes de fabrication ci-dessus, caractérisé en que l'étape d'introduction des goutteurs cylindriques consiste à imprimer aux goutteurs provenant du poste d'amenée une vitesse sensiblement égale à la vitesse d'avance du tuyau dans la tête d'extrusion au moment où lesdits goutteurs entrent en contact en un point avec ledit tuyau, de sorte que les goutteurs circulent dans la tête d'extrusion selon la direction d'extrusion du tuyau sensiblement à la vitesse de ce dernier.

Grâce à ces caractéristiques, l'invention procure un système simple et fiable qui permet d'obtenir des débits élevés lors de la fabrication de tuyaux d'irrigation de type goutte-à-goutte et, par conséquent, de diminuer le prix de revient de tels tuyaux. Il est notamment possible de faire avancer les goutteurs cylindriques à la vitesse désirée, sans être obligé de ralentir ou d'interrompre le procédé de fabrication du tuyau.

D'autres caractéristiques et avantages de la présente invention apparaîtront plus clairement à la lecture de la description détaillée qui suit d'un premier et d'un second exemples de réalisation d'une ligne de fabrication selon l'invention, cet exemple étant donné à titre purement illustratif et non limitatif, en liaison avec les dessins annexés dans lesquels :

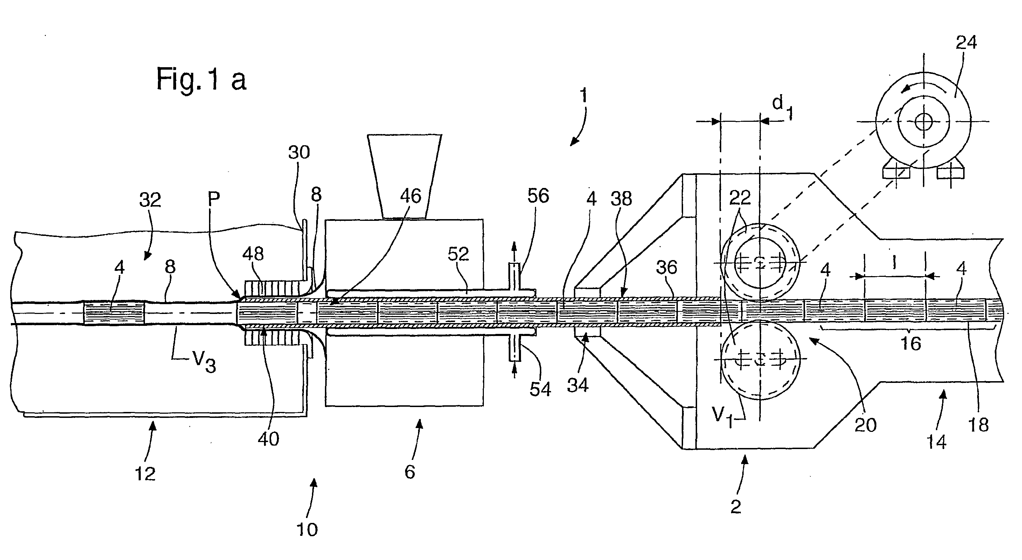

- la figure 1a est une vue schématique partielle en élévation latérale d'une ligne de fabrication conforme au premier mode de réalisation de l'invention;
- la figure 1 b est une vue de détail à plus grande échelle de la ligne de fabrication représentée à la figure 1a au niveau de l'entrée des moyens de calibrage;
- la figure 2 est une vue d'une variante de réalisation de la ligne de fabrication représentée à la figure 1 a;
- la figure 3a est une vue analogue à celle de la figure 1a montrant une ligne de fabrication d'un tuyau d'irrigation goutte-à-goutte conforme au second mode de réalisation de l'invention, et
- la figure 3b est une vue de détail à plus grande échelle de la ligne de fabrication de la figure 3a au niveau de l'entrée des moyens de calibrage.

La présente invention procède de l'idée générale inventive qui consiste à introduire des goutteurs cylindriques dans un tuyau d'irrigation en cours de formation alors que celui-ci est, au moins en partie, sorti des moyens de calibrage qui sont destinés à le conformer dans sa configuration définitive. De la sorte, le tuyau qui est encore chaud peut se déformer et épouser, sans se déchirer, la forme qui lui est imprimée par des goutteurs qui peuvent présenter d'importantes irrégularités de forme. La présente invention consiste également à injecter les goutteurs cylindriques dans le tuyau d'irrigation selon la direction d'extrusion de ce tuyau, et à imprimer à ces goutteurs une vitesse sensiblement égale à la vitesse d'extrusion dudit tuyau, de sorte que le processus de fabrication peut s'effectuer sans discontinuité et à vitesse accrue.

Selon un premier mode de réalisation de l'invention, la ligne de fabrication représentée à titre d'exemple sur la figure 1a et désignée dans son ensemble par la référence numérique générale 1, comprend successivement :
- un poste d'amenée 2 des goutteurs cylindriques 4;
- une tête d'extrusion 6 d'un tuyau d'irrigation du type goutte-à-goutte 8;
- des moyens de calibrage 10 du tuyau d'irrigation 8 en aval desquels les goutteurs 4 sont amenés en contact avec la face intérieure dudit tuyau d'irrigation 8 pour adhérer à celui-ci, et
- un poste de refroidissement 12 du tuyau 8 après extrusion et calibrage.

Le sens de progression des opérations de fabrication est de droite à gauche sur l'ensemble des figures annexées à la présente demande de brevet.

En ce qui concerne les goutteurs 4, il suffit, pour les besoins de la présente description, de noter que ces goutteurs 4 ont globalement la forme d'un cylindre réalisé en une matière plastique et qu'une partie déterminée de la surface de ces goutteurs 4 doit être tournée vers la paroi intérieure du tuyau 8.

Le procédé de fabrication selon l'invention commence par la fabrication des goutteurs cylindriques 4. Il se poursuit par l'introduction de ces goutteurs 4 les uns après les autres à l'intérieur du tuyau d'irrigation 8 pendant que celui-ci est formé dans la tête d'extrusion 6, puis calibré dans les moyens de calibrage 10. Les goutteurs cylindriques 4 sont ensuite soudés à la paroi intérieure dudit tuyau 8 au fur et à mesure de la progression de ce tuyau 8 en aval de la tête d'extrusion 6. Enfin, le tuyau 8 sera refroidi dans le poste de refroidissement 12 et percé ultérieurement au droit de chaque goutteur 4 afin de faire communiquer ces derniers avec l'extérieur.

Plus précisément, en amont du poste d'amenée 2 des gouttéurs 4 est disposé un bol vibreur (non représenté et connu en soi) d'une capacité d'environ 1 m³. Ce bol vibreur permet de trier, d'orienter et de positionner les goutteurs cylindriques 4 dans le poste d'amenée 2 en conformité avec la position qu'ils doivent avoir une fois qu'ils seront introduits dans le tuyau d'irrigation 8.

Le poste d'amenée 2 comprend des moyens doseurs 14 dans lesquels on forme une file d'attente 16 constituée d'une succession de goutteurs cylindriques 4 se touchant par leurs extrémités. Pour des raisons qui seront détaillées ultérieurement, on fait progresser les goutteurs cylindriques 4 dans la file d'attente 16 à une vitesse V₁ inférieure à la vitesse V₃ d'extrusion du tuyau d'irrigation 8. Cette vitesse V₁ est synchronisée avec la vitesse V₃ d'extrusion du tuyau 8 via un dispositif de traction (non représenté et connu en soi) selon la relation V₁ = l*n, où l est la longueur d'un goutteur 4 et n est le nombre de goutteurs introduits dans le tuyau d'irrigation 8 par minute. Le dispositif de traction est destiné à exercer une force de traction sur le tuyau 8 à sa sortie des moyens de calibrage 10 afin de garantir une progression sans à-coup dudit tuyau 8.

Comme on peut le voir sur la figure 1a, les moyens doseurs 14 se composent d'un canal accumulateur 18 susceptible, par exemple, de contenir de dix à cinquante goutteurs 4 selon la longueur de ces derniers. Les moyens doseurs 14 comprennent également, dans l'exemple illustré, un système convoyeur formé d'un cabestan 20 constitué de deux galets 22 animés de mouvements conjugués et séparés d'une distance égale ou légèrement inférieure à l'épaisseur d'un goutteur 4. Additionnellement, l'un des deux galets 22 du cabestan 20 est entraîné par un moteur d'entraînement 24 à la vitesse V₁ inférieure à la vitesse d'avance V₃ du tuyau d'irrigation 8. Il va de soi que d'autres moyens de convoyage peuvent être envisagés, par exemple un dispositif à chenilles.

La tête d'extrusion 6 peut être de tout type connu. Elle présente un alésage central 26 qui permet d'ébaucher en continu une ébauche de tuyau 28 qui est amenée dans les moyens de calibrage 10 où le tuyau d'irrigation 8 est conformé dans sa configuration désirée. Les moyens de calibrage 10 jouxtent la paroi amont 30 du poste de refroidissement 12 qui comporte classiquement un bac à vide 32 équipé d'une série de jets projetant un liquide de refroidissement tel que de l'eau. De tels dispositifs sont bien connus de l'homme du métier.

Comme mentionné ci-dessus, les goutteurs 4 sont entraînés individuellement à la vitesse V₁ par les galets 22 du cabestan 20. Les goutteurs 4 sont ensuite libérés par les galets 22 et pénètrent dans des moyens d'insertion 34. Ces moyens d'insertion 34 comprennent un tube 36 dans lequel les goutteurs cylindriques 4 progressent à la vitesse V₁ qui leur a été imprimée par les galets 22 du cabestan 20 en se poussant les uns les autres.

Conformément à l'invention, le tube 36 est disposé selon l'axe d'extrusion du tuyau 8, ce tube s'étendant du côté amont 38 au moins en partie dans la tête d'extrusion 6, et s'étendant du côté de son extrémité aval 40 au moins en partie dans le dispositif de calibrage 10. On évite ainsi que des goutteurs 4 aux formes très irrégulières ne déchirent le tuyau 8 lorsqu'ils sont fixés par soudage à chaud sur la paroi intérieure dudit tuyau 8. En effet, les goutteurs 4 ne sont introduits dans le tuyau d'irrigation 8 pour y être fixés que lorsque ce tuyau 8 est déjà, au moins en partie, sorti des moyens de calibrage 10 destinés à lui conférer sa forme désirée et qui comprennent classiquement une douille métallique 42 présentant un alésage central 44 dont les dimensions correspondent à celles dudit tuyau 8. L'expansion du tuyau d'irrigation 8 n'est donc plus, à ce stade des opérations, limitée par les moyens de calibrage 10, de sorte que le tuyau d'irrigation 8 va pouvoir absorber les irrégularités de forme des goutteurs 4 sans se déchirer.

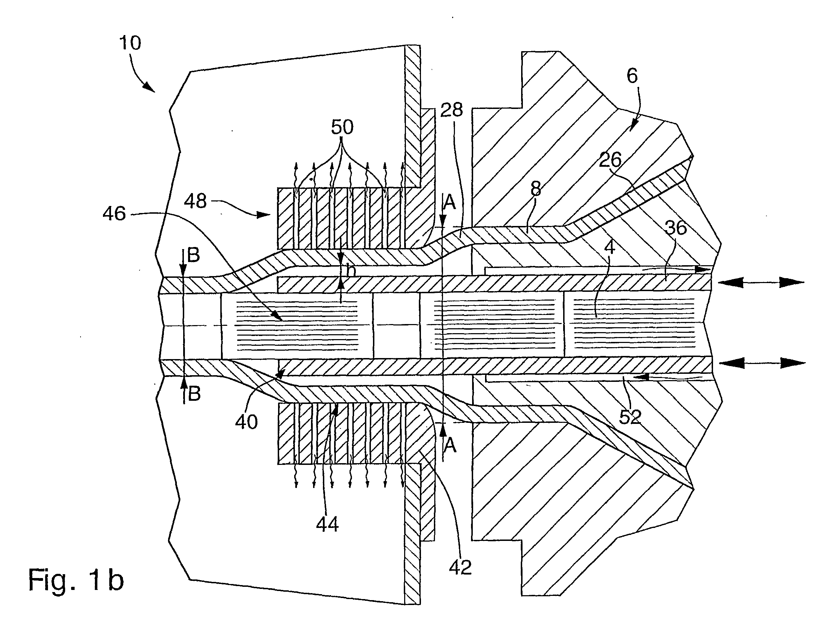

Selon une caractéristique préférentielle de l'invention qui ressort plus particulièrement de la figure 1 b, le tube 36 mène de l'extrémité amont de la ligne de fabrication 1 vers l'aval en passant successivement à travers la tête d'extrusion 6 et l'ébauche 28 du tuyau d'irrigation 8, et s'étend au moins jusqu'à la sortie 46 des moyens de calibrage 10. Avantageusement, la position de l'extrémité aval 40 du tube 36 est réglable axialement pour prendre en compte la position du tuyau 8 à sa sortie des moyens de calibrage 10, de façon à déterminer un point P où les goutteurs cylindriques 4 s'accrochent le mieux audit tuyau 8. Ce réglage de position, matérialisé par une double flèche sur la figure 1 b, s'opère en avançant ou en reculant le tube 36. Il est effectué à l'aide de moyens de réglage qui ne seront pas représentés ici et qui sont à la portée de l'homme du métier ordinaire.

La matière plastique en fusion est amenée dans la tête d'extrusion 6 où elle est conformée en tuyau. Lorsque la matière en fusion quitte la tête d'extrusion 6, le diamètre A du tuyau 8 est plus grand que le diamètre final B dudit tuyau 8 à sa sortie des moyens de calibrage 10. Un dispositif d'aspiration 48 exerce une force de succion sur la matière plastique par l'application d'un vide. Ce vide est créé par une pompe à vide agissant sur le diamètre extérieur du tuyau d'irrigation 8 par l'intermédiaire de canaux 50 ou de disques entrecroisés. Il se forme ainsi un espace de hauteur h entre le tuyau 8 en formation et le tube 36 afin que ledit tuyau 8 n'adhère pas audit tube 36. Sous l'effet du vide appliqué, les forces de frottement entre le tuyau 8 en formation et les moyens de calibrage 10 augmentent. Cette augmentation des forces de frottement doit être compensée par la force de traction exercée sur le tuyau d'irrigation 8 par le dispositif de traction disposé en aval de la tête d'extrusion 6. Etant donné que la matière plastique n'est refroidie qu'en surface et est donc encore molle, la force de traction provoque un étirement du tuyau d'irrigation 8 en même temps qu'une augmentation de la vitesse d'extrusion de ce dernier pour amener le diamètre intérieur du tuyau 8 après calibrage au diamètre extérieur du goutteur 4. La section, et donc le diamètre du tuyau d'irrigation 8, diminuant par étirement, les goutteurs 4 entrent en contact avec le tuyau 8 après calibrage. La surface interne du tuyau 8 étant encore en fusion, les goutteurs 4 se soudent à la paroi interne du tuyau 8.

La distance d₁ entre les axes des galets 22 et l'entrée du tube 36 est inférieure à la longueur l d'un goutteur cylindrique, de sorte que lorsqu'un goutteur 4 a presque fini de passer entre les galets 22, il est guidé par lesdits galets 22 et pénètre automatiquement dans le tube 36.

Le tube 36 a un diamètre intérieur légèrement supérieur au diamètre extérieur des goutteurs cylindriques 4 pour permettre à ces goutteurs 4 de circuler librement sans risque de blocage.

Au niveau de la tête d'extrusion 6, le tube 36 est entouré d'une chemise de refroidissement 52 dans laquelle circule un fluide thermostaté tel que, par exemple, de l'eau. Cette chemise de refroidissement 52 est destinée à éviter que les goutteurs 4 ne fondent lors de leur passage dans la tête d'extrusion 6 et n'adhèrent à la paroi intérieure du tube 36 dans lequel ils circulent. La chemise 52 comprend un conduit 54 d'amenée du fluide de refroidissement. Le fluide de refroidissement circule dans la chemise 52 et, après s'être réchauffé, quitte la chemise 52 par un conduit de sortie 56.

Les goutteurs 4 progressent dans le tube 36 en se touchant par leurs extrémités selon la direction d'extrusion du tuyau d'irrigation 8 à la vitesse V₁ qui leur est imprimée par les moyens doseurs 14. Ainsi, c'est le rapport entre la vitesse V₁ à laquelle les goutteurs 4 circulent dans le tube 36 et la vitesse V₃ d'extrusion du tuyau d'irrigation 8 qui détermine le pas avec lequel les goutteurs 4 se répètent le long dudit tuyau 8.

Le tube 36 s'étend jusqu'à la sortie 46 des moyens de calibrage 10, voire au delà, de manière à ajuster le point P dans les moyens de calibrage 10 où le diamètre du tuyau d'irrigation 8 diminue et où les goutteurs cylindriques 4 s'accrochent le mieux au tuyau 8 en formation. Cette disposition de l'invention permet d'éliminer les problèmes liés à la géométrie des goutteurs 4.

A la sortie des moyens de calibrage 10, le tuyau 8 est refroidi dans le poste de refroidissement 12. Ultérieurement, il sera percé au droit de chaque goutteur 4 afin de faire communiquer ces derniers avec l'extérieur.

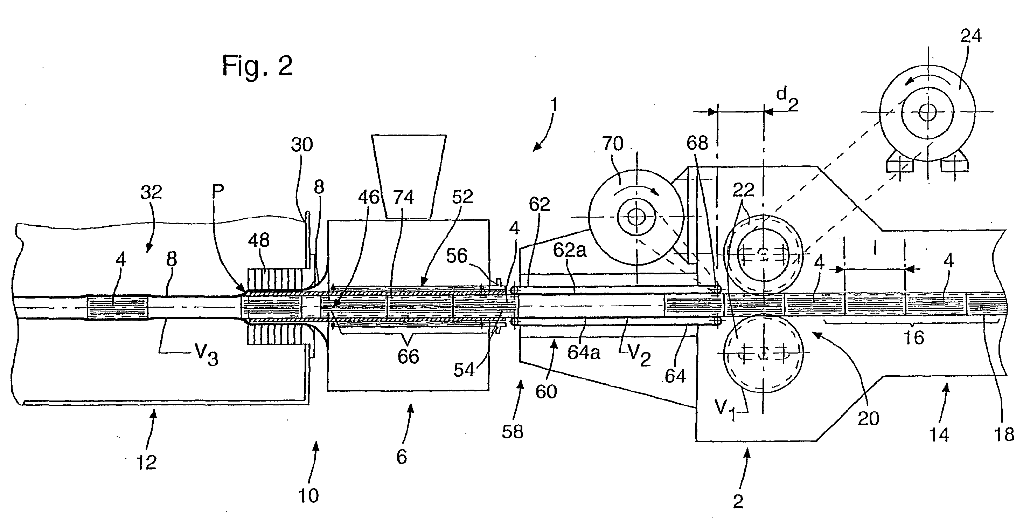

Selon une variante de réalisation représentée à la figure 2, entre les moyens doseurs 14 et le tube 36 sont prévus des moyens de convoyage 58 qui amènent les goutteurs 4 provenant du poste d'amenée 2 jusqu'à l'entrée du tube 36 en leur imprimant une vitesse d'avance V₂ sensiblement égale ou inférieure à la vitesse d'avance V₃ du tuyau 8 dans la tête d'extrusion 6 et les moyens de calibrage 10 au moment où lesdits goutteurs 4 entrent en contact avec ledit tuyau 8.

On fait donc progresser les goutteurs cylindriques 4 dans la tête d'extrusion 6 et les moyens de calibrage 10 selon la direction d'extrusion du tuyau d'irrigation 8 jusqu'au point P où lesdits goutteurs 4 entrent en contact avec la paroi intérieure dudit tuyau 8, et on imprime auxdits goutteurs 4 une vitesse V₂ qui est sensiblement égale ou inférieure à la vitesse V₃ d'extrusion du tuyau d'irrigation. Par vitesse V₂ "sensiblement égale" à la vitesse d'extrusion V₃ du tuyau 8, on entend une vitesse qui n'est pas inférieure de plus de 20% à la vitesse d'extrusion du tuyau 8, cette vitesse V₂ étant d'autant plus proche de ladite vitesse d'extrusion V₃ du tuyau 8 que ledit tuyau 8 est mince. Cette disposition est particulièrement avantageuse pour des tuyaux de faible épaisseur, typiquement inférieure ou égale à 0,6 mm. De la sorte, comme la vitesse relative entre le goutteur 4 et le tuyau 8 en formation est sensiblement nulle, on évite tout choc entre ceux-ci qui pourrait détériorer le tuyau 8. Par contre, pour des tuyaux 8 de plus forte épaisseur, la vitesse d'avance V₂ des goutteurs 4 pourra bien entendu s'écarter davantage de la vitesse d'extrusion V₃ du tuyau d'irrigation 8.

Pour imprimer aux goutteurs 4 la vitesse d'avance V₂, les moyens de convoyage 58 comprennent une chenille 60 comportant une courroie supérieure 62 et une courroie inférieure 64 animées de mouvements conjugués et dont les brins inférieur 62a et supérieur 64a sont parallèles et maintenus écartés l'un de l'autre d'une distance égale ou légèrement inférieure à l'épaisseur d'un goutteur 4. La chenille 60 imprime aux goutteurs 4 la vitesse d'avance V₂ décrite ci-dessus et amène lesdits goutteurs 4 jusqu'à l'entrée du tube 36.

Avant de commencer les opérations de fabrication, on forme dans le tube 36 une file d'attente 66 constituée d'une succession de goutteurs 4 convenablement orientés et se touchant par leurs extrémités. Un goutteur, éjecté par la chenille 60, pénètre dans le tube 36 et progresse dans celui-ci à la vitesse V₂ en poussant les goutteurs 4 qui le précèdent. On fait ainsi progresser les goutteurs cylindriques 4 à une vitesse V₂ égale ou inférieure à la vitesse V₃ d'extrusion du tuyau d'irrigation 8 à travers la tête d'extrusion 6 dans le tube 36.

Lorsque, plus en amont, un nouveau goutteur 4 est amené par les moyens de convoyage 58 à l'entrée du tube 36 à la vitesse V₂, ce nouveau goutteur 4 fait avancer les goutteurs 4 présents dans la file d'attente 66 d'une distance équivalant à la longueur de l'un de ces goutteurs 4, de sorte que le goutteur 4 qui se trouve le plus en aval dans la file d'attente 66 est éjecté du tube 36 à la vitesse V₂ et est pris en charge par le tuyau 8 en formation qui lui imprime une accélération et porte sa vitesse à V₃.

La chenille 60 chemine à la vitesse V₂ égale ou inférieure à la vitesse d'avance V₃ du tuyau d'irrigation 8 dans la tête d'extrusion 6 et les moyens de calibrage 10. Pour cela, les deux courroies supérieure 62 et inférieure 64 passent sur des poulies 68 et sont entraînées dans le sens des flèches à la vitesse V₂ par des moyens d'entraînement tels qu'un moteur 70. Par rapport aux dispositifs à piston de l'art antérieur, la chenille 60 a comme avantage d'être beaucoup plus simple, et donc plus fiable du point de vue mécanique, et de permettre une avance en continu facile à régler.

Comme on l'aura compris de ce qui précède, les goutteurs cylindriques 4 qui proviennent du bol vibreur arrivent à la suite les uns des autres en formant une file 16 dans laquelle ils se touchent par leurs extrémités à hauteur des moyens doseurs 14. Là, les goutteurs 4 sont entraînés individuellement à la vitesse V₁ par les galets 22 du cabestan 20. Les goutteurs 4 sont ensuite libérés par les galets 22 et transférés sur la chenille 60. De préférence, la distance d₂ entre les axes des galets 22 et les axes des poulies 68 sur lesquelles passent les courroies 62 et 64 de la chenille 60 est inférieure à la longueur l d'un goutteur 4, de sorte que, lorsqu'un goutteur a presque fini de passer entre les galets 22, il est pris automatiquement en charge par la chenille 60. Bien entendu, d'autres dispositifs de transfert des goutteurs 4 depuis les moyens doseurs 14 vers les moyens de convoyage 58 peuvent être envisagés.

Sur la chenille 60, les goutteurs cylindriques 4 sont amenés à une vitesse V₂ qui peut être choisie égale ou inférieure à la vitesse V₃ à laquelle le tuyau d'irrigation 8 progresse à travers les moyens de calibrage 10 et la partie aval de la ligne de fabrication 1. Lorsque la vitesse V₂ à laquelle la chenille 60 chemine diffère peu de la vitesse V₃ d'avance du tuyau d'irrigation 8 dans la tête d'extrusion 6, c'est la vitesse V₁ à laquelle les goutteurs 4 défilent dans les moyens doseurs 14 qui détermine la distance ou pas avec lequel lesdits goutteurs 4 vont se répéter dans le sens longitudinal du tuyau d'irrigation 8. Ainsi, plus la vitesse V₁ sera inférieure à la vitesse V₂, plus le pas entre deux goutteurs cylindriques 4 successifs dans le tuyau 8 sera grand. Inversement, plus les vitesses V₁ et V₂ seront voisines l'une de l'autre, plus les goutteurs 4 seront rapprochés les uns des autres.

Grâce à la présente invention, on peut donc ajuster de façon très précise et sans devoir interrompre le processus de fabrication le pas avec lequel les goutteurs cylindriques 4 se répètent dans le tuyau d'irrigation 8, simplement en réglant la vitesse linéaire V₁ à laquelle les goutteurs 4 défilent entre les deux galets 22 du cabestan 20. En outre, les moyens utilisés, à savoir le cabestan 20 et la chenille 60, sont extrêmement simples et donc fiables et peu sujets aux pannes.

Dans tout ce qui suit, les éléments identiques à ceux décrits précédemment en liaison avec les figures 1a et 1b seront désignés par les mêmes références numériques. Pour une description détaillée de ces différents éléments, on se reportera aux passages concernés de la description qui précède du mode de réalisation représenté aux figures 1a et 1b.

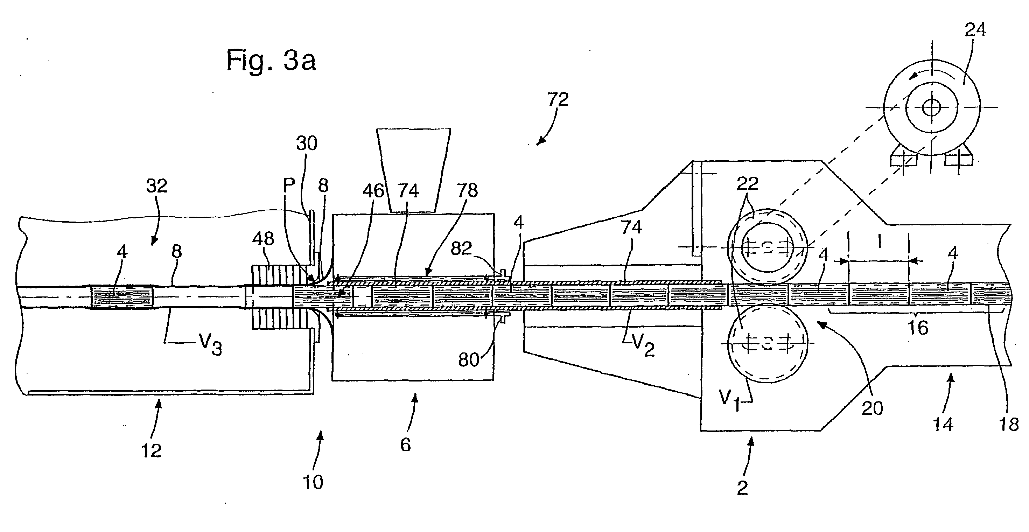

La ligne de fabrication représentée à la figure 3a est conforme à un deuxième aspect de l'invention. Désignée dans son ensemble par la référence numérique générale 72, cette ligne de fabrication comprend, de façon analogue à la ligne de fabrication décrite en liaison avec la figure 1a :
- un poste d'amenée 2 des goutteurs cylindriques 4;
- une tête d'extrusion 6 d'un tuyau d'irrigation 8 dans lequel les goutteurs cylindriques 4 sont amenés en contact avec la face intérieure dudit tuyau d'irrigation 8 pour adhérer à celui-ci, et
- un poste de refroidissement 12 du tuyau 8 après extrusion et calibrage de ce dernier.

Un bol vibreur (non représenté et connu en soi) permet de placer les goutteurs cylindriques 4 dans le poste d'amenée 2 en conformité avec la position que ces goutteurs 4 doivent avoir une fois qu'ils seront introduits dans le tuyau d'irrigation 8. Ce bol vibreur est disposé en amont du poste d'amenée 2 des goutteurs 4.

Le poste d'amenée 2 comprend des moyens doseurs 14 dans lesquels on forme une file d'attente 16 constituée de goutteurs cylindriques 4 se touchant par leurs extrémités. Les goutteurs 4 progressent dans la file d'attente 16 à une vitesse V₁ inférieure à la vitesse V₃ d'extrusion du tuyau d'irrigation 8.

Comme précédemment, les moyens doseurs 14 se composent, dans l'exemple illustré, d'un cabestan 20 formé de deux galets 22 et ne seront donc pas décrits plus en détail ici.

Les goutteurs cylindriques 4 qui proviennent du bol vibreur arrivent à la suite les uns des autres en se touchant par leurs extrémités à hauteur des moyens doseurs 14. Là, les goutteurs 4 sont entraînés individuellement à la vitesse V₁ par les galets 22 du cabestan 20. Les goutteurs 4 sont ensuite libérés par les galets 22 et pénètrent dans un système de guidage qui peut, par exemple, prendre la forme d'un canal de dosage 74. Conformément à l'invention, ce canal de dosage 74, traversé par les goutteurs 4, est disposé du côté amont au moins en partie dans la tête d'extrusion 6 et s'étend à l'intérieur de ladite tête d'extrusion 6 jusque dans la région de sortie 76 de cette dernière. Plus précisément, le canal de dosage 74 s'étend entre les moyens doseurs 14 et le point P où les goutteurs cylindriques 4 sont pris en charge par le tuyau d'irrigation 8 en cours de formation à la sortie 76 de la tête d'extrusion 6.

Le canal de dosage 74 rencontre sur son chemin un dispositif de refroidissement 78 destiné à éviter que les goutteurs 4 ne fondent lors de leur passage dans la tête d'extrusion 6. Dans ce dispositif de refroidissement 78 circule un fluide de refroidissement thermostaté tel que, par exemple, de l'eau, qui arrive par un conduit d'amenée 80 et qui quitte le dispositif de refroidissement 78 après s'être réchauffé par un conduit de sortie 82.

Pour que les goutteurs cylindriques 4 entrent en contact avec le tuyau d'irrigation 8 après extrusion, la section du tuyau 8 est diminuée par étirage et, par conséquent, le diamètre dudit tuyau 8 diminue proportionnellement. Le diamètre du tuyau 8 diminuant, les goutteurs 4 entrent en contact avec la paroi intérieure du tuyau 8 qui est encore chaude. De ce fait, la surface des goutteurs 4 entre en fusion et se lie avec le tuyau 8.

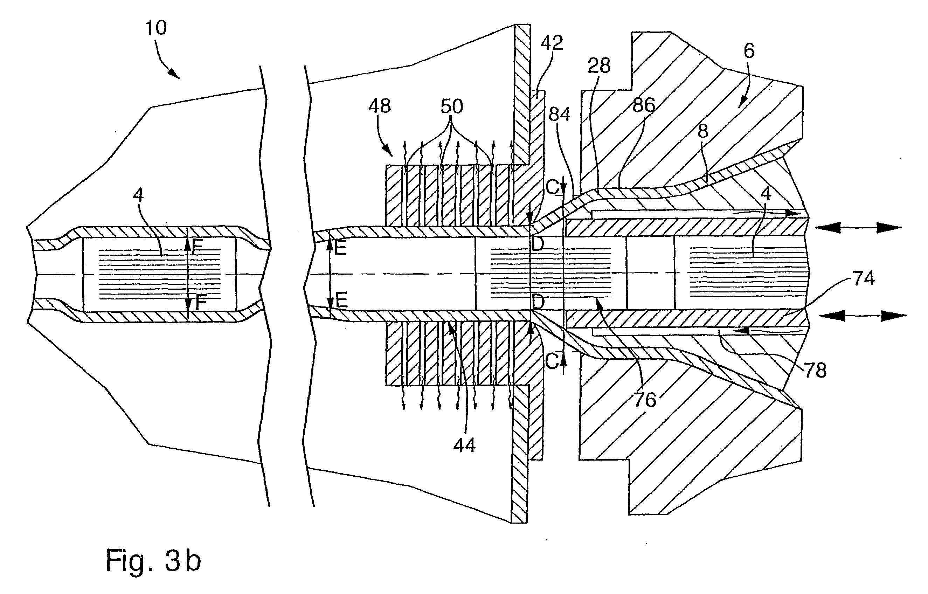

Ce dernier point ressort clairement de la figure 3b qui est une vue de détail à plus grande échelle de la ligne de fabrication 72 selon le deuxième aspect de l'invention au niveau de la jonction entre la tête d'extrusion 6 et les moyens de calibrage 10.

Comme expliqué ci-dessus, les goutteurs 4 traversent la tête d'extrusion 6 où la matière plastique en fusion est formée pour produire le tuyau d'irrigation 8. En général, le diamètre C de la matière en fusion à la sortie 76 de la tête d'extrusion 6 est plus grand que le diamètre D des moyens de calibrage 10. Ces moyens de calibrage 10 sont nécessaires pour donner au produit fini la dimension désirée. Ils comprennent, comme dans l'exemple précédent, une douille métallique 42 présentant un alésage central 44 dont les dimensions correspondent à la forme finale que l'on veut imprimer au tuyau d'irrigation 8. Dans le cas présent, les outillages d'extrusion sont conformés de telle façon que le diamètre intérieur E du tuyau d'irrigation 8, une fois pris en charge par les moyens de calibrage 10, soit égal ou plus petit que le diamètre extérieur F d'un goutteur cylindrique 4. Les goutteurs 4 sont donc amenés dans le tuyau 8 lors du calibrage et sont entraînés par ce dernier. Le soudage des goutteurs 4 avec le tuyau 8 a lieu à partir de ce moment là. Une fois un goutteur 4 pris en charge par le tuyau 8, l'emplacement que ce goutteur 4 occupait à la sortie de la tête d'extrusion 6 se retrouve libre.

On notera que, selon une autre caractéristique de l'invention, la position du canal de dosage 74 dans lequel circulent les goutteurs 4 à l'intérieur de la tête d'extrusion 6 est ajustable axialement pour prendre en compte la position du cône d'étirement 84 de la matière en fusion au niveau de la jonction entre la sortie 76 de la tête d'extrusion 6 et l'entrée des moyens de calibrage 10. Plus précisément, on approche la sortie du canal de dosage 74 aussi près que possible dudit cône d'étirement 84 afin de déterminer la position dans laquelle les goutteurs 4 s'accrochent le mieux au tuyau 8 en formation. Ce réglage de position, matérialisé par une double flèche sur la figure 3b, s'opère en approchant ou en éloignant la sortie du canal de dosage 74 de l'entrée des moyens de calibrage 10. Il est effectué à l'aide de moyens de réglage non représentés et connus de l'homme du métier.

A la sortie des moyens de calibrage 10, le tuyau 8 sera refroidi dans le poste de refroidissement 12 et percé ultérieurement au droit de chaque goutteur 4 afin de faire communiquer ces derniers avec l'extérieur.

Comme dans l'exemple illustré à la figure 1 a, la tête d'extrusion 6 présente un alésage central 86 qui permet d'ébaucher en continu l'ébauche de tuyau 28 qui sera ensuite amenée dans les moyens de calibrage 10 où le tuyau 8 sera conformé dans sa configuration désirée. Les moyens de calibrage 10 jouxtent la paroi amont 30 du poste de refroidissement 12 qui ne sera pas décrit plus en détail ici.

Il va de soi que l'invention n'est pas limitée aux modes de réalisation qui viennent d'être décrits, et que des modifications et des variantes peuvent être envisagées par l'homme du métier sans sortir du cadre de la présente invention.

En particulier, de façon analogue à la variante de réalisation de l'invention représentée en liaison avec la figure 2, des moyens de convoyage 58 tels que, par exemple, une chenille 60 à courroies 62 et 64 peuvent être prévus entre les moyens doseurs 14 et le canal de dosage 74. Ces moyens de convoyage 58 amèneront les goutteurs 4 provenant du poste d'amenée 2 jusqu'à l'entrée du canal de dosage 74 en leur imprimant une vitesse V₂ sensiblement égale ou inférieure à la vitesse d'avance V₃ du tuyau 8 dans la tête d'extrusion 6 au moment où lesdits goutteurs 4 entrent en contact avec ledit tuyau 8. Avant de commencer les opérations de fabrication, on aura pris soin de former dans le canal de dosage 74 une file d'attente 66 constituée d'une pluralité de goutteurs 4 en contact par leurs extrémités. Ainsi, lorsqu'un goutteur 4 sera éjecté par la chenille 60, il pénètrera dans le canal de dosage 74 et progressera dans celui-ci à la vitesse V₂ en poussant les goutteurs 4 présents dans la file d'attente 66 d'une distance équivalant à la longueur de l'un de ces goutteurs 4, de sorte que le goutteur 4 qui se trouve le plus en aval dans la file d'attente 66 sera éjecté du canal de dosage 74 à la vitesse V₂ et sera pris en charge par le tuyau 8 en formation qui lui imprimera une accélération et portera sa vitesse à V₃.

Il va de soi que l'invention n'est pas limitée aux modes de réalisation qui viennent d'être décrits, et que des modifications et des variantes peuvent être envisagées sans sortir du cadre de la présente invention.

## Revendications

1. Ligne de fabrication (1) d'un tuyau d'irrigation (8) du type goutte-à-goutte comprenant :
- un poste d'amenée (2) de goutteurs cylindriques (4);
- une tête d'extrusion (6) du tuyau d'irrigation (8) qui permet de former une ébauche de tuyau (28), et
- des moyens de calibrage (10) dans lesquels le tuyau d'irrigation (8) est conformé dans sa configuration désirée,
- les goutteurs (4) circulant dans la ligne de fabrication (1) depuis le poste d'amenée (2) situé en amont de ladite ligne de fabrication (1) vers la tête d'extrusion (6) située en aval de cette ligne (1),
- des moyens de traction pour exercer une force traction sur ledit tuyau (8),
**caractérisée en ce qu'**elle comprend en outre un tube (36) traversé par les goutteurs cylindriques (4) et disposé selon l'axe d'extrusion dudit tuyau (8), ce tube (36) s'étendant du côté amont (38) au moins en partie dans la, tête d'extrusion (6), et s'étendant du côté de son extrémité aval (40) au moins en partie dans les moyens de calibrage (10) et **en ce que** les moyens de traction exercent une force qui permet d'amener le diamètre intérieur du tuyau (8) après calibrage au diamètre extérieur des goutteurs (4) de sorte que les goutteurs cylindriques (4) se soudent à la paroi interne du tuyau (8).

2. Ligne de fabrication selon la revendication 1, **caractérisée en ce que** le tube (36) s'étend au moins jusqu'à la sortie (46) des moyens de calibrage (10).

3. Ligne de fabrication selon la revendication 2, **caractérisée en ce que** la position de l'extrémité aval (40) du tube (36) est réglable axialement pour prendre en compte la position du tuyau (8) à sa sortie des moyens de calibrage (10), de façon à déterminer le point où les goutteurs cylindriques (4) s'accrochent le mieux audit tuyau (8).

4. Ligne de fabrication selon l'une quelconque des revendications 1 à 3, **caractérisée en ce que** les moyens de calibrage (10) comprennent des canaux d'aspiration (50) coopérant avec un dispositif d'aspiration (48) pour exercer une force de succion sur le tuyau d'irrigation (8) en formation par application d'un vide, de sorte qu'il se forme un espace entre ledit tuyau (8) et le tube (36) et qu'une force de friction entre le tuyau (8) et les moyens de calibrage (10) est engendrée.

5. Ligne de fabrication (72) d'un tuyau d'irrigation (8) du type goutte-à-goutte comprenant :
- un poste d'amenée (2) de goutteurs cylindriques (4);
- une tête d'extrusion (6) du tuyau d'irrigation (8) qui permet de former une ébauche de tuyau (28), et
- des moyens de calibrage (10) dans lesquels le tuyau d'irrigation (8) est conformé dans sa configuration désirée,
- les goutteurs (4) circulant dans la ligne de fabrication (72) depuis le poste d'amenée (2) situé en amont de ladite ligne de fabrication (72) vers la tête d'extrusion (6) située en aval de cette ligne (72),
**caractérisée en ce qu'**elle comprend en outre un canal de dosage (74) traversé par les goutteurs (4), ce canal (74) étant disposé du côté amont au moins en partie dans la tête d'extrusion (6) et s'étendant à l'intérieur de ladite tête d'extrusion (6) jusque dans la région de sortie (76) de cette dernière et **en ce que** la position du canal de dosage (74) est ajustable axialement pour prendre en compte la position du cône d'étirement (84) du tuyau (8) en formation au niveau de la jonction entre la sortie (76) de ladite tête d'extrusion (6) et l'entrée des moyens de calibrage (10) afin de déterminer le point où lesdits goutteurs (4) s'accrochent le mieux audit tuyau (8).

6. Ligne de fabrication selon l'une quelconque des revendications 1 à 5, **caractérisée en ce que** le poste d'amenée (2) comprend des moyens doseurs (14) dans lesquels est formée une file d'attente (16) constituée d'une succession de goutteurs cylindriques (4) contigus par leurs extrémités, lesdits goutteurs (4) progressant dans les moyens doseurs (14) à une vitesse (V₁) inférieure à la vitesse d'extrusion (V₃) du tuyau (8).

7. Ligne de fabrication selon la revendication 6, **caractérisée en ce que** les moyens doseurs (14) comprennent un canal accumulateur (18) dans lequel les goutteurs (4) cheminent en se touchant par leurs extrémités avant d'être pris en charge par un cabestan (20) formé de deux galets (22) animés de mouvements conjugués et séparés d'une distance égale ou légèrement inférieure à l'épaisseur d'un goutteur (4).

8. Ligne de fabrication selon l'une quelconque des revendications 6 ou 7, **caractérisée en ce qu'**en amont de la tête d'extrusion (6) sont prévus des moyens de convoyage (58) qui amènent les goutteurs (4) provenant du poste d'amenée (2) jusqu'à l'entrée du tube (36), respectivement du canal de dosage (74), en leur imprimant une vitesse (V₂) sensiblement égale à la vitesse d'avance (V₃) du tuyau (8) dans la tête d'extrusion (6) au moment où lesdits goutteurs (4) entrent en contact avec ledit tuyau (8).

9. Ligne de fabrication selon la revendication 8, **caractérisée en ce que** les moyens de convoyage (58) comprennent une chenille (60) comportant une courroie supérieure (62) et une courroie inférieure (64) qui sont animées de mouvements conjugués et dont les brins inférieur (62a) et supérieur (64a) respectifs sont parallèles et maintenus écartés l'un de l'autre d'une distance égale ou légèrement inférieure à l'épaisseur d'un goutteur cylindrique (4), la chenille (60) amenant les goutteurs (4) jusqu'à l'entrée du tube (36), respectivement du canal de dosage (74).

10. Ligne de fabrication selon l'une quelconque des revendications 1 à 9, **caractérisée en ce que**, au niveau de la tête d'extrusion (6), le tube (36), respectivement le canal de dosage (74), traversent une chemise de refroidissement (52, 78) destinée à éviter que les goutteurs (4) ne fondent lors de leur passage dans la tête d'extrusion (6) et dans lequel circule un fluide de refroidissement thermostaté qui arrive par un conduit d'amenée (54, 80) et qui quitte ledit dispositif de refroidissement (52, 78) après s'être réchauffé par un conduit de sortie (56, 82).

11. Ligne de fabrication selon l'une quelconque des revendications 1 à 10, **caractérisée en ce que** les moyens de calibrage (10) sont disposés à l'entrée d'un dispositif de refroidissement (12) qui comporte un bac à vide (32) équipé d'une pluralité de jets projetant un liquide de refroidissement pour refroidir le tuyau d'irrigation (8) à sa sortie desdits moyens de calibrage (10).

12. Procédé pour la mise en oeuvre de la ligne de fabrication selon la revendication 8, **caractérisé en que** l'étape d'introduction des goutteurs cylindriques (4) consiste à imprimer aux goutteurs (4) provenant du poste d'amenée (2) une vitesse (V₂) sensiblement égale à la vitesse d'avance (V₃) du tuyau (8) dans la tête d'extrusion (6) au moment où lesdits goutteurs (4) entrent en contact en un point (P) avec ledit tuyau (8), de sorte que les goutteurs (4) circulent dans la tête d'extrusion (6) selon la direction d'extrusion du tuyau (8) sensiblement à la vitesse de ce dernier.

13. Procédé selon la revendication 12, **caractérisé en ce que** la vitesse (V₂) n'est pas inférieure de plus de 20% à la vitesse d'avance (V₃) du tuyau d'irrigation (8).

## Patentansprüche

1. Fertigungslinie (1) für einen Bewässerungsschlauch (8) des tropfenweisen Typs, die umfasst:
- eine Station (2) für die Zuführung zylindrischer Tropfenerzeuger (4);
- einen Kopf (6) zum Strangpressen des Bewässerungsschlauchs (8), der einen Rohling des Schlauchs (8) zu bilden ermöglicht, und
- Kalibrierungsmittel (10), in denen der Bewässerungsschlauch (8) in Übereinstimmung mit seiner gewünschten Konfiguration gebracht wird,
- wobei sich die Tropfenerzeuger (4) in der Fertigungslinie (1) von der Zuführungsstation (2), die sich am Einlass der Fertigungslinie (1) befindet, zu dem Strangpresskopf (6), der sich am Auslass dieser Linie (1) befindet, bewegen,
- Zugmittel, die auf den Schlauch (8) eine Zugkraft ausüben,
**dadurch gekennzeichnet, dass** sie außerdem ein Rohr (36) umfasst, durch das die zylindrischen Tropfenerzeuger (4) verlaufen und das in Richtung der Strangpressachse des Schlauchs (8) angeordnet ist, wobei sich dieses Rohr (36) auf seiner Einlassseite (38) wenigstens zum Teil in den Strangpresskopf (6) erstreckt und sich auf Seiten seines Auslassendes (40) wenigstens zum Teil in die Kalibrierungsmittel (10) erstreckt, und dass die Zugmittel eine Kraft ausüben, die ermöglicht, den Innendurchmesser des Schlauchs (8) nach der Kalibrierung auf den Außendurchmesser der Tropfenerzeuger (4) zu bringen, derart, dass sich die zylindrischen Tropfenerzeuger (4) mit der Innenwand des Schlauchs (8) verbinden.

2. Fertigungslinie nach Anspruch 1, **dadurch gekennzeichnet, dass** sich das Rohr (36) wenigstens bis zum Ausgang (46) der Kalibrierungsmittel (10) erstreckt.

3. Fertigungslinie nach Anspruch 2, **dadurch gekennzeichnet, dass** die Position des Auslassendes (40) des Rohrs (36) axial einstellbar ist, um die Position des Schlauchs (8) bei seinem Verlassen der Kalibrierungsmittel (10) zu berücksichtigen, um so den Punkt zu bestimmen, an dem die zylindrischen Tropfenerzeuger (4) am besten an dem Schlauch (8) hängen bleiben.

4. Fertigungslinie nach einem der Ansprüche 1 bis 3, **dadurch gekennzeichnet, dass** die Kalibrierungsmittel (10) Saugkanäle (50) umfassen, die mit einer Saugvorrichtung (48) zusammenwirken, um auf den Bewässerungsschlauch (8) eine Saugkraft auszuüben, so dass er durch Anwenden eines Unterdrucks geformt wird, derart, dass sich zwischen dem Schlauch (8) und dem Rohr (36) ein Zwischenraum bildet und dass zwischen dem Schlauch (8) und den Kalibrierungsmitteln (10) eine Reibungskraft erzeugt wird.

5. Fertigungslinie (72) für einen Bewässerungsschlauch (8) des tropfenweisen Typs, die umfasst:
- eine Station (2) für die Zuführung zylindrischer Tropfenerzeuger (4);
- einen Kopf (6) zum Strangpressen des Bewässerungsschlauchs (8), der einen Rohling des Schlauchs (28) zu bilden ermöglicht, und
- Kalibrierungsmittel (10), in denen der Bewässerungsschlauch (8) mit seiner gewünschten Konfiguration in Übereinstimmung gebracht wird,
- wobei sich die Tropfenerzeuger (4) in der Fertigungslinie (72) von der Zuführungsstation (2), die sich auf der Einlassseite der Fertigungslinie (72) befindet, zu dem Strangpresskopf (6), der sich auf der Auslassseite dieser Linie (72) befindet, bewegen,
**dadurch gekennzeichnet, dass** sie außerdem einen Dosierungskanal (74) umfasst, durch den die Tropfenerzeuger (4) verlaufen, wobei dieser Kanal (74) auf der Einlassseite wenigstens zum Teil im Strangpresskopf (6) angeordnet ist und sich innerhalb des Strangpresskopfs (6) bis in den Austrittsbereich (76) dieses letzteren erstreckt, und dass die Position des Dosierungskanals (74) axial einstellbar ist, um die Position des Aufdehnungskegels (84) des Schlauchs (8) bei seiner Bildung auf Höhe des Übergangs zwischen dem Auslass (76) des Strangpresskopfs (6) und dem Einlass der Kalibrierungsmittel (10) zu berücksichtigen, um den Punkt zu bestimmen, an dem die Tropfenerzeuger (4) am besten in dem Schlauch (8) hängen bleiben.

6. Fertigungslinie nach einem der Ansprüche 1 bis 5, **dadurch gekennzeichnet, dass** die Zuführungsstation (2) Dosierungsmittel (14) umfasst, in denen eine Warteschlange (16) gebildet wird, die aus einer Folge zylindrischer Tropfenerzeuger (4), die Ende an Ende angeordnet sind, gebildet ist, wobei sich die Tropfenerzeuger (4) in den Dosierungsmitteln (14) mit einer Geschwindigkeit (V₁) vorwärts bewegen, die kleiner als die Strangpressgeschwindigkeit (V₃) des Schlauchs (8) ist.

7. Fertigungslinie nach Anspruch 6, **dadurch gekennzeichnet, dass** die Dosierungsmittel (14) einen Akkumulatorkanal (18) umfassen, in dem sich die Tropfenerzeuger (4) bewegen, indem sich ihre Enden berühren, bevor sie durch eine Antriebswelle (20) belastet werden, die aus zwei Rollen (22) gebildet ist, die zu koordinierten Bewegungen angetrieben werden und um eine Strecke beabstandet sind, die gleich oder etwas kleiner als die Dicke eines Tropfenerzeugers (4) ist.

8. Fertigungslinie nach einem der Ansprüche 6 oder 7, **dadurch gekennzeichnet, dass** auf der Einlassseite des Strangpresskopfes (6) Transportmittel (58) vorgesehen sind, die die Tropfenerzeuger (4), die von der Zuführungsstation (2) ankommen, bis zum Einlass des Rohrs (36) bzw. des Dosierungskanals (74) mitnehmen, indem sie ihnen eine Geschwindigkeit (V₂) verleihen, die im Wesentlichen gleich der Vorschubgeschwindigkeit (V₃) des Schlauchs (8) in dem Strangpresskopf (6) zu dem Zeitpunkt ist, zu dem die Tropfemerzeuger (4) mit dem Schlauch (8) in Kontakt gelangen.

9. Fertigungslinie nach Anspruch 8, **dadurch gekennzeichnet, dass** die Transportmittel (58) eine Kette (60) umfassen, die ein oberes Band (62) und ein unteres Band (64) aufweist, die zu koordinierten Bewegungen angetrieben werden und wovon der untere Zweig (62a) bzw. der obere Zweig (64a) parallel sind und in einem gegenseitigen Abstand gehalten werden, der gleich oder etwas kleiner als die Dicke eines zylindrischen Tropfenerzeugers (4) ist, wobei die Kette (60) die Tropfenerzeuger (4) bis zum Einlass des Rohrs (36) bzw. des Dosierungskanals (74) mitnimmt.

10. Fertigungslinie nach einem der Ansprüche 1 bis 9, **dadurch gekennzeichnet, dass** das Rohr (36) bzw. der Dosierungskanal (74) auf Höhe des Strangpresskopfes (6) durch einen Abkühlungsweg (52, 78) laufen, der dazu bestimmt ist, ein Schmelzen der Tropfenerzeuger (4) bei ihrem Durchgang durch den Strangpresskopf (6) zu vermeiden, und in dem ein thermostabilisiertes Kühlungsfluid zirkuliert, das durch eine Zuführungsleitung (58, 80) ankommt und die Abkühlungsvorrichtung (52, 78) durch eine Auslassleitung (56, 82) verlässt, nachdem es sich erwärmt hat.

11. Fertigungslinie nach einem der Ansprüche 1 bis 10, **dadurch gekennzeichnet, dass** die Kalibrierungsmittel (10) am Eingang der Abkühlungsvorrichtung (12) angeordnet sind, die einen Unterdruckbehälter (32) aufweist, der mit mehreren Düsen versehen ist, die eine Kühlflüssigkeit ausspritzen, um den Bewässerungsschlauch (8) abzukühlen, wenn er die Kalibrierungsmittel (10) verlässt.

12. Verfahren zum Betreiben der Fertigungslinie nach Anspruch 8, **dadurch gekennzeichnet, dass** der Schritt des Einführens der zylindrischen Tropfenerzeuger (4) darin besteht, den Tropfenerzeugem (4), die von der Zuführungsstation (2) ankommen, eine Geschwindigkeit (V₂) zu verleihen, die im Wesentlichen gleich der Vorschubgeschwindigkeit (V₃) des Schlauchs (8) im Strangpresskopf (6) zu dem Zeitpunkt ist, zu dem die Tropfenerzeuger (4) an einem Punkt (P) mit dem Schlauch (8) in Kontakt gelangen, so dass sich die Tropfenerzeuger (4) in dem Strangpresskopf (6) in der Richtung, in der der Schlauch (8) stranggepresst wird, im Wesentlichen mit der Geschwindigkeit dieses letzteren bewegen.

13. Verfahren nach Anspruch 12, **dadurch gekennzeichnet, dass** die Geschwindigkeit (V₂) nicht um mehr als 20 % kleiner als die Vorschubgeschwindigkeit (V₃) des Bewässerungsschlauchs (8) ist.

## Claims

1. Production line(1) for a drip irrigation pipe (8) comprising:
- a station (2) for supplying cylindrical emitters (4);
- an irrigation pipe (8) extruding head (6) for forming a pipe blank (28), and
- calibrating means (10) wherein the irrigation pipe (8) is shaped into the desired configuration,
- the emitters (4) circulating in the production line (1) from the supply station (2) located upstream of said production line (1) towards the extruding head (6) located downstream of said line (1),
- traction means for exerting a traction force on said pipe (8),
**characterised in that** it further comprises a tube (36) through which the cylindrical emitters (4) pass and arranged along the extruding axis of said pipe (8), said tube (36) extending on the upstream side (38) at least partly into the extruding head (6) and extending on its downstream side (40) at least partly into the calibrating means (10) and **in that** the traction means exert a force that enables the inner diameter of the pipe (8) to be brought to the external diameter of the emitters (4) after calibration, such that the cylindrical emitters (4) are bonded to the inner wall of the pipe (8).

2. Production line according to claim 1, **characterised in that** the tube (36) extends at least as far as the exit (46) of the calibrating means (10).

3. Production line according to claim 2, **characterised in that** the position of the downstream end (40) of the tube (36) can be adjusted axially to take account of the position of the pipe (8) at its exit from the calibrating means (10), so as to determine the point at which the cylindrical emitters (4) catch on best to said pipe (8).

4. Production line according to any one of claims 1 to 3, **characterised in that** the calibrating means (10) comprise suction channels (50) cooperating with a suction device (48) for exerting a suction force on the irrigation pipe (8) being formed by applying a vacuum, so that a space is formed between said pipe (8) and the tube (36) and a friction force is generated between the pipe (8) and the calibrating means (10).

5. Production line (72) for a drip irrigation pipe (8) comprising:
- a station (2) for supplying cylindrical emitters (4);
- an irrigation pipe (8) extruding head (6) for forming a pipe blank (28), and
- calibrating means (10) wherein the irrigation pipe (8) is shaped into the desired configuration,
- the emitters (4) circulating in the production line (72) from the supply station (2) located upstream of said production line (72) towards the extruding head (6) located downstream of said line (72),
**characterised in that** it further comprises a dosing channel (74) through which the emitters (4) pass, said channel (74) being disposed on the upstream side at least partly into the extruding head (6) and extending inside said extruding head (6) as far as the exit region (76) of the latter and **in that** the position of the dosing channel (74) can be adjusted axially to take account of the position of the drawing cone (84) of the pipe (8) being formed at the junction between the exit (76) of said extruding head (6) and the entry of said calibrating means (10) in order to determine the point at which said emitters (4) best catch onto said pipe (8).

6. Production line according to any one of claims 1 to 5, **characterised in that** the supply station (2) includes dosing means (14) in which a queue (16) forms, comprising a succession of cylindrical emitters (4) contiguous via their ends, said emitters (4) proceeding into the dosing means (14) at a speed (V₁) less than the extruding speed (V₃) of the pipe (8).

7. Production line according to claim 6, **characterised in that** the dosing means (14) comprise an accumulator channel (18) into which the emitters (4) advance touching each other by their ends before being taken in charge by a winch (20) formed by two rollers (22) actuated by joint movements and separated by a distance equal to or slightly less than the thickness of one emitter (4).

8. Production line according to any one of claims 6 or 7, **characterised in that** upstream of the extruding head (6) there are provided conveying means (58), which bring the emitters (4) originating from the supply station (2) to the entry of the tube (36), respectively of the dosing channel (74), imparting thereto a speed (V2) substantially equal to the speed of advancement (V₃) of the pipe (8) into the extruding head (6) at the moment when said emitters (4) enter into contact with said pipe (8).

9. Production line according to claim 8, **characterised in that** the conveying means (58) comprise a drive track (60) comprising an upper belt (62) and a lower belt (64), which are actuated by joint movements and whose respective lower (62a) and upper (64a) sides are parallel and held apart from each other at a distance equal to or slightly less than the width of one cylindrical emitter (4), the drive track (60) bring the emitters (4) to the entry of the tube (36), respectively of the dosing channel (74).

10. Production line according to any one of claims 1 to 9, **characterised in that**, at the extruding head (6), the tube (36) and respectively the dosing channel (74), pass through a cooling sleeve (52, 78) to prevent the emitters (4) melting during their passage into the extruding head (6) and in which there flows a thermostated cooling fluid which arrives via a in supply pipe (54, 80) and which leaves said cooling device (52, 78) after being heated through an exit pipe (56, 82).

11. Production line according to any one of claims 1 to 10, **characterised in that** the calibrating means (10) are disposed at the entry of a cooling device (12) which includes a vacuum tank (32) fitted with a plurality of jets projecting a cooling fluid for cooling the irrigation pipe (8) at its exit from said calibrating means (10).

12. Method for implementing the production line according to claim 8, **characterised in that** the step of introducing the cylindrical emitters (4) consists in imparting on the emitters (4) coming from the supply station (2) a speed (V₂) substantially equal to the speed of advancement (V₃) of the pipe (8) into the extruding head (6) when said emitters (4) come into contact at a point (P) with said pipe (8), so that the emitters (4)circulate in the extruding head (6) along the direction of extrusion of the pipe (8) substantially at the speed of the latter.

13. Method according to claim 12, **characterised in that** the speed (V₂) is not more than 20% less than the speed of advancement (V3) of the irrigation pipe (8).
